# EUROPEAN PATENT APPLICATION

(11) **EP 4 521 544 A1**
(43) Date of publication of application: **12.03.2025**
(21) Application number: 23912552.9
(22) Date of filing: 08.11.2023
(51) Int. Cl.: H01M 50/538, H01M 50/583, H01M 10/04, H01M 50/342, H01M 50/249

(54) **BATTERY CELL, BATTERY MODULE, BATTERY PACK, AND VEHICLE COMPRISING SAME**

(30) Priority: 28.12.2022 KR 20220187775; 30.05.2023 KR 20230069489
(71) Applicant: LG Energy Solution, Ltd., Seoul 07335 (KR)
(72) Inventor: LEE, Byoung-Gu, Daejeon 34122 (KR)
(74) Representative: Goddar, Heinz J.
(86) International application number: PCT/KR2023/017918
(87) International publication number: WO 2024/143874

(57) **Abstract**

A battery cell according to an embodiment of the present disclosure may include an electrode assembly in which a first electrode and a second electrode are wound around a winding axis while a separator is interposed therebetween, thereby defining a core and an outer circumferential surface, the first electrode including a first non-coated portion that is not coated with an active material layer along the winding direction, a battery housing having an opening provided on one side thereof and configured to accommodate the electrode assembly through the opening, a collector including a support portion disposed on an upper portion of the electrode assembly, a tap coupling portion extending from the support portion and coupled to the first non-coated portion, and a housing coupling portion extending from the support portion to be electrically coupled to the inner surface of the battery housing and including at least one welded portion welded to the inner surface of the between housing, and a housing cover configured to cover the opening, wherein the number of welded portions may be smaller than or equal to the number of tap coupling portions, or wherein a breaking portion configured to have lower strength than the surrounding area may be provided at the boundary between the support portion and the housing coupling portion.

## Description

### TECHNICAL FIELD

The present disclosure relates to a battery cell, a battery module, a battery pack, and a vehicle including the same.

The present application claims priority to Korean Patent Application No. 10-2022-0187775 filed on December 28, 2022 and Korean Patent Application No. 10-2023-0069489 filed on May 30, 2023 in the Republic of Korea, the disclosures of which are incorporated herein by reference.

### BACKGROUND ART

Secondary batteries, which are easy to apply depending on the product group and have electrical characteristics such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency in that they have the primary advantage of being able to dramatically reduce the use of fossil fuels and in that no by-product is generated due to energy use.

Types of current secondary batteries widely used include lithium ion batteries, lithium polymer batteries, nickel cadmium batteries, nickel hydrogen batteries, nickel zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage and/or charge/discharge capacity.

Meanwhile, a conventional battery cell was designed to improved safety such that an aluminum tab is induced to fuse when a high current flows momentarily using a structure in which current flows through the positive electrode by means of the aluminum tab.

Meanwhile, in the case of a battery cell having the structure of the present disclosure, the collector plate and the foil tab are welded for low resistance design, and the positive electrode collector plate and the rivet are directly welded, so there is no separate electrode tab, which makes it difficult to implement a fusing structure. Even if a fusing structure is designed by altering the design of the positive electrode collector plate, there is a problem of increasing the internal resistance of the battery cell according thereto.

### DISCLOSURE

### Technical Problem

The present disclosure has been designed to solve the problems of the related art, and therefore the present disclosure is directed to providing a collector capable of blocking current under conditions where high current flows while minimizing an increase in internal resistance of the battery cell.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery cell including: an electrode assembly in which a first electrode and a second electrode are wound around a winding axis while a separator is interposed therebetween, thereby defining a core and an outer circumferential surface, the first electrode including a first non-coated portion that is not coated with an active material layer along the winding direction; a battery housing having an opening provided on one side thereof and configured to accommodate the electrode assembly through the opening; a collector including a support portion disposed on an upper portion of the electrode assembly, a tap coupling portion extending from the support portion and coupled to the first non-coated portion, and a housing coupling portion extending from the support portion to be electrically coupled to the inner surface of the battery housing and including at least one welded portion welded to the inner surface of the between housing; and a housing cover configured to cover the opening, wherein the number of welded portions may be smaller than or equal to the number of tap coupling portions, or wherein a breaking portion configured to have lower strength than the surrounding area may be provided at the boundary between the support portion and the housing coupling portion.

Preferably, the number of housing coupling portions may be smaller than the number of tap coupling portions.

In an aspect of the present disclosure, the housing coupling portion may include: a contact portion coupled to the inner surface of the battery housing; and a connection portion connecting the support portion and the contact portion.

Preferably, the connection portion and the contact portion may have the same width in the extension direction.

In another aspect of the present disclosure, the breaking portion may be configured in the form of a notch formation line including a plurality of notches.

In another aspect of the present disclosure, the housing coupling portion may be configured to be elongated in length.

Preferably, at least a portion of the housing coupling portion may have a rim shape with an empty center.

In another aspect of the present disclosure, the housing cover may include a venting portion configured to break when the internal pressure of the battery housing increases to a certain level or more.

Preferably, the radial length of the venting portion may be greater than the radial length of the support portion.

In another aspect of the present disclosure, the battery housing may include a beading portion formed at an end adjacent to the opening and press-fitted inward.

Here, the battery cell may include an insulator interposed between the beading portion and the electrode assembly.

Preferably, the insulator may be configured to have a shape that matches the inner surface of the beading portion.

Meanwhile, the present disclosure provides a battery pack including at least one battery cell according to the embodiments described above.

Furthermore, the present disclosure provides a vehicle including at least one battery pack according to the embodiment described above.

### Advantageous Effects

According to the present disclosure, it is possible to provide a collector capable of blocking current under conditions where high current flows while minimizing an increase in internal resistance of the battery cell.

However, the effects obtainable according to the present disclosure are not limited to the above-mentioned effects, and other technical effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a diagram illustrating a battery cell according to an embodiment of the present disclosure.
FIG. 2 is a longitudinal cross-sectional and perspective view of FIG. 1.
FIG. 3 is a longitudinal cross-sectional view of the battery cell in FIG. 1.
FIG. 4 is a diagram illustrating a collector according to an embodiment of the present disclosure.
FIG. 5 is a diagram illustrating a collector as a comparative example of the present disclosure.
FIG. 6 is a diagram illustrating a collector according to an embodiment of the present disclosure.
FIG. 7 is a diagram illustrating a collector according to another embodiment of the present disclosure.
FIG. 8 is a diagram illustrating a collector according to another embodiment of the present disclosure.
FIG. 9 is a diagram illustrating a collector according to another embodiment of the present disclosure.
FIG. 10 is a diagram illustrating a collector according to another embodiment of the present disclosure.
FIG. 11 is a diagram illustrating a collector according to another embodiment of the present disclosure.
FIG. 12 is a diagram illustrating a collector according to another embodiment of the present disclosure.
FIG. 13 is a diagram illustrating a collector according to another embodiment of the present disclosure.
FIG. 14 is a diagram illustrating the state in which the collector in FIG. 13 is elongated.
FIG. 15 is a diagram illustrating the state after gas venting occurs in a battery cell according to an embodiment of the present disclosure.
FIG. 16 is a diagram illustrating the battery cell in FIG. 15 viewed from the outside.
FIG. 17 is a diagram illustrating a battery cell according to another embodiment of the present disclosure.
FIG. 18 is a diagram illustrating a battery cell according to another embodiment of the present disclosure.
FIG. 19 is a diagram illustrating a battery pack including a battery cell according to an embodiment of the present disclosure.
FIG. 20 is a diagram illustrating a vehicle including the battery pack in FIG. 19.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

Additionally, to aid understanding of the present disclosure, the accompanying drawings are not drawn to real scale and the dimensions of some elements may be exaggerated. In addition, the same reference numerals may indicate the same components between different embodiments.

Stating that two objects to be compared are the same means that they are "substantially the same." Therefore, "substantially the same" may include the case having a deviation that is considered low in the art, for example, a deviation of less than 5%. In addition, a parameter that is uniform in a certain area may indicate that it is uniform from the average perspective.

Although "first," "second," etc. are used to describe various elements, these elements are not limited to these terms. These terms are only used to distinguish one element from another element, and unless otherwise stated, a first element may also be a second element.

Throughout the specification, unless otherwise stated, respective elements may include a single or a plurality of elements.

Configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'fastened' to another element" should be understood that the elements may be directly connected or fastened to each other, and that another element may be "interposed" between the elements or that the elements may be "connected," "coupled," or "fastened" through other elements.

Throughout the specification, "A and/or B", unless otherwise stated, may denote A or B or A and B, and "C to D", unless otherwise stated, may denote "equal to or greater than C and equal to or less than D."

For convenience of explanation, in this specification, the longitudinal direction of a winding axis of an electrode assembly 10 wound in a jellyroll shape will be referred to as an "axial direction (Y)". In addition, the direction surrounding the winding axis will be referred to as a "circumferential direction(X)." In addition, the direction approaching or moving away from the winding axis will be referred to as a "radial direction." Among these, the direction approaching the winding axis is called a "centripetal direction," and the direction moving away from the winding axis is called a "centrifugal direction."

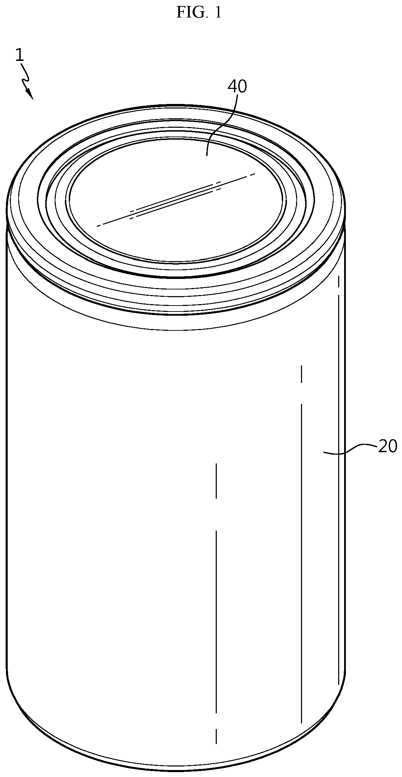

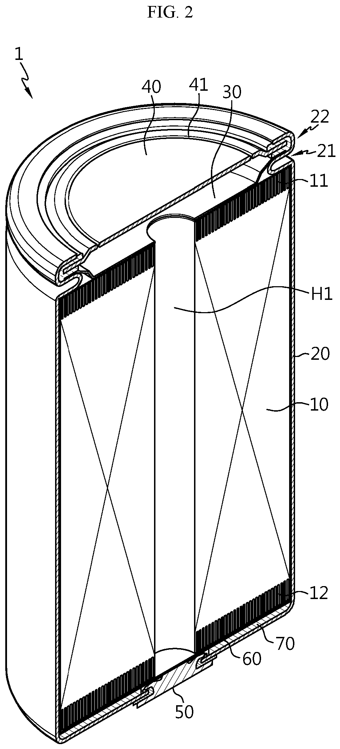

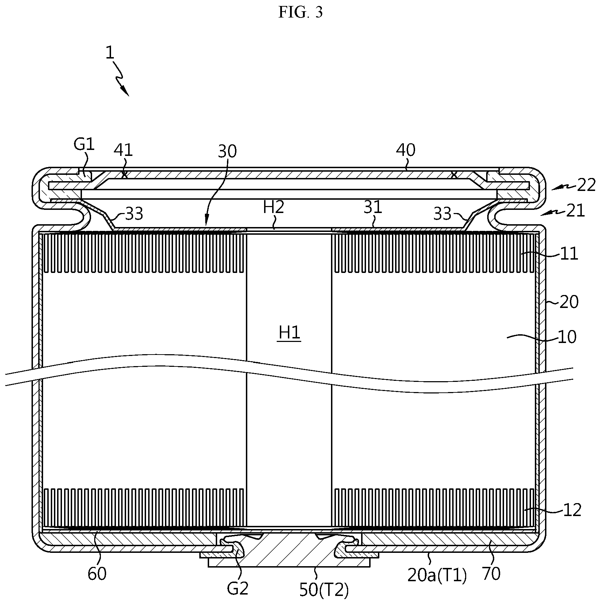

FIG. 1 is a diagram illustrating a battery cell 1 according to an embodiment of the present disclosure, and FIG. 2 is a longitudinal cross-sectional and perspective view of FIG. 1. FIG. 3 is a longitudinal cross-sectional view of the battery cell 1 in FIG. 1.

Referring to FIG. 1, the battery cell 1 according to an embodiment of the present disclosure includes an electrode assembly 10, a battery housing 20, a collector 30, and a housing cover 40. In addition thereto, the battery cell 1 may further include an insulator S and/or a terminal 50 and/or a sealing gasket G1 and/or an insulating gasket G2 and/or a second collector 60, and/or an insulator 70. The present disclosure is not limited to a specific type of battery, and may be applied to other types of batteries, such as a prismatic battery.

The electrode assembly 10 includes a first non-coated portion 11 and a second non-coated portion 12. More specifically, the electrode assembly 10 has a structure in which a first electrode and a second electrode are wound around a winding axis while a separator is interposed therebetween, thereby defining a core and an outer circumferential surface. That is, the electrode assembly 10 applied to the present disclosure may be a jellyroll-type electrode assembly 10. In this case, an additional separator may be provided on the outer circumferential surface of the electrode assembly 10 to insulate the same from the battery housing 20. The electrode assembly 10 may have a winding structure well known in the art without limitations.

The first electrode includes a first electrode collector and a first electrode active material coated on one or both sides of the first electrode collector. A non-coated portion that is not coated with the first electrode active material is provided at one end of the first electrode in the width direction (a direction parallel to the height direction of the battery cell 1 shown in FIG. 1) thereof. That is, the first electrode includes a non-coated portion that is not coated with an active material at the end of the long side thereof along the winding direction and exposed to the outside of the separator. Hereinafter, the non-coated portion functioning as a first electrode tab will be referred to as a first non-coated portion 11. The first non-coated portion 11 is provided on the upper portion of the electrode assembly 10 accommodated in the battery housing 20 in the height direction (a direction parallel to the height direction of the battery cell 1 shown in FIG. 1) thereof. That is, the first electrode includes a first non-coated portion 11 that is not coated with an active material at the end of the long side and exposed to the outside of the separator, and at least a portion of the first non-coated portion 11 itself is used as an electrode tab. The first non-coated portion 11 may be, for example, a negative electrode tab.

Meanwhile, at least a portion of the first non-coated portion 11 may include a plurality of segments divided along the winding direction of the electrode assembly 10. In this case, the plurality of segments may be bent in the radial direction of the electrode assembly 10.

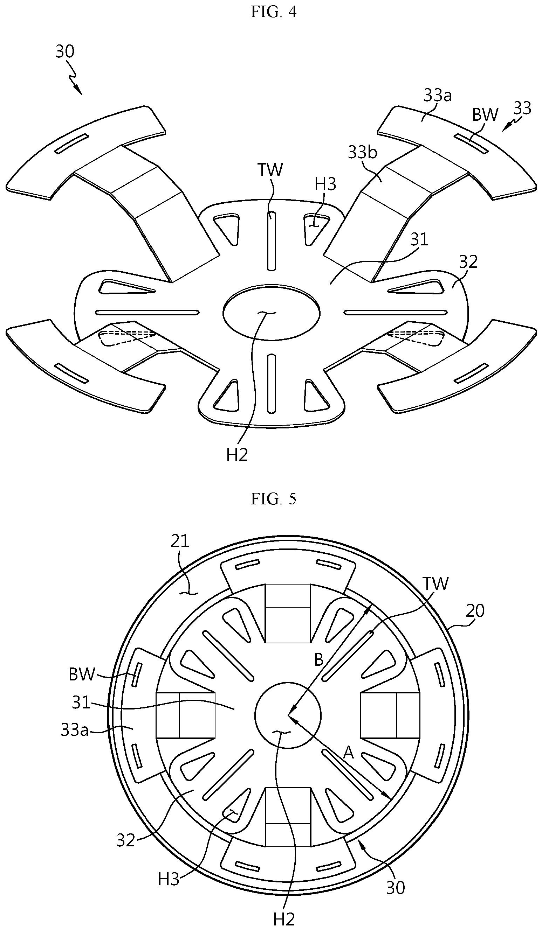

Referring to FIGS. 2 and 3, the plurality of bent segments of the first non-coated portion 11 may overlap in multiple layers to form a bent surface. In this case, a tap coupling portion 32 of the collector 30, which will be described later, may be coupled to the bent surface. The tap coupling portion 32 may be coupled to the area where the plurality of segments overlaps in multiple layers. In this case, the tap coupling portion 32 may be seated on the bent surface of the first non-coated portion 11 and welding may be performed on a certain area thereof. That is, the tap coupling portion 32 may be coupled to the area where the plurality of segments of the first non-coated portion 11 overlaps in multiple layers. For example, as shown in FIG. 5, the tap coupling portion 32 may have at least one welded portion TW that is welded to a certain area while seated on the bent surface of the first non-coated portion 11.

The second electrode includes a second electrode collector and a second electrode active material coated on one or both sides of the second electrode collector. A non-coated portion that is not coated with the second electrode active material is provided at the other end of the second electrode in the width direction (a direction parallel to the height direction of the battery cell 1 shown in FIG. 1) thereof. That is, the second electrode includes a non-coated portion that is not coated with an active material at the end of the long side along the winding direction and exposed to the outside of the separator. Hereinafter, the non-coated portion functioning as a second electrode tab will be referred to as a second non-coated portion 12. The second non-coated portion 12 is provided at the bottom of the electrode assembly 10 accommodated in the battery housing 20 in the height direction thereof. That is, the second electrode includes a second non-coated portion 12 that is not coated with an active material at the end of the long side and exposed to the outside of the separator, and at least a portion of the second non-coated portion 12 itself is used as an electrode tab. The second non-coated portion 12 may be, for example, a positive electrode tab.

Meanwhile, in the present disclosure, any active material known in the art may be used, without limitations, as the positive electrode active material coated on the positive electrode plate and the negative electrode active material coated on the negative electrode plate.

Referring to FIG. 1, the battery housing 20 is a substantially cylindrical container having an opening formed on one side thereof, and is made of a conductive metal material. In general, the side face of the battery housing 20 and the bottom face opposite the opening are integrally formed. That is, the battery housing 20 is generally configured such that the top in the height direction is open and the bottom is closed. The bottom face of the battery housing 20 may be configured in a substantially flat shape. The battery housing 20 receives the electrode assembly 10 through the opening formed on one side in the height direction. The battery housing 20 may also receive an electrolyte through the opening.

The battery housing 20 may have a beading portion 21 formed at an end adjacent to the opening provided at the top of the battery housing 20. The battery housing 20 may further include a crimping portion 22 formed on the beading portion 21. The beading portion 21 may be configured such that the outer circumferential surface of the battery housing 20 is press-fitted to a predetermined depth. More specifically, the beading portion 21 may be configured to be press-fitted inward in the area between the opening formed on one side of the battery housing 20 and an accommodation portion that accommodates the electrode assembly 10.

The beading portion 21 is formed above the electrode assembly 10. The inner diameter of the battery housing 20 in the area where the beading portion 21 is formed is smaller than the diameter of the electrode assembly 10. At least one tap coupling portion 32 of the collector 30, which will be described later, may be located lower than the beading portion 21.

The beading portion 21 provides a support surface on which the housing cover 40 is seated. In addition, the beading portion 21 may provide a support surface on which at least a portion of the edge of the collector 30, which will be described later, is seated and coupled. That is, at least a portion of the edge of the collector 30 of the present disclosure and/or the edge of the housing cover 40 may be seated on the upper surface of the beading portion 21. In order to stably support at least a portion of the edge of the collector 30 and/or the edge of the housing cover 40, the upper surface of the beading portion 21 may be configured to extend in a direction approximately parallel to the bottom face of the battery housing 20, that is, in a direction approximately perpendicular to the side wall of the battery housing 20.

The beading portion 21 may prevent the electrode assembly 10, which may have a size approximately corresponding to the inner diameter of the battery housing 20, from coming out through the opening formed at the top of the battery housing 20 and serve as a support portion on which the housing cover 40 is seated. The upper beading portion 21 may function as a support portion for fixing a contact portion 33a of the collector 30 and a sealing gasket G1, as well as the housing cover 40.

The crimping portion 22 is formed on the top of the beading portion 21. The crimping portion 22 is configured to extend and bend to surround the edge of the housing cover 40 disposed above the beading portion 21. Such a configuration of the crimping portion 22 may fix the housing cover 40 onto the beading portion 21.

Next, the collector 30 according to an embodiment of the present disclosure will be described in detail by comparing the same with a conventional collector with reference to FIGS. 1 to 14.

First, referring to FIGS. 1 and 2, the collector 30 according to an embodiment of the present disclosure is accommodated inside the battery housing 20 and is electrically connected to the electrode assembly 10 and the battery housing 20. That is, the collector 30 electrically connects the electrode assembly 10 and the battery housing 20.

FIG. 4 is a diagram illustrating a collector 30 according to an embodiment of the present disclosure.

Referring to FIG. 4, the collector 30 includes a support portion 31 located on one surface of the electrode assembly 10, a plurality of tap coupling portions 32 extending from the support portion 31 and coupled to the first non-coated portion 11, and a plurality of housing coupling portions 33 extending from the support portion 31 and coupled to the inner surface of the battery housing 20.

The tap coupling portion 32 and the housing coupling portion 33 are indirectly connected through the support portion 31, instead of being directly connected to each other. Therefore, when an external impact is applied to the battery cell 1 of the present disclosure, it is possible to minimize the possibility of damage to the coupling portion between the collector 30 and the electrode assembly 10 and the coupling portion between the collector 30 and the battery housing 20.

Referring to FIG. 4, at least one tap coupling portion 32 and/or at least one housing coupling portion 33 may be provided. At least one tap coupling portion 32 and at least one housing coupling portion 33 may be disposed, for example, in a roughly radial shape, a cross shape, or a combination thereof, with respect to the center of the collector 30. In another aspect, the respective housing coupling portions 33 may be disposed between adjacent tap coupling portions 32.

Referring to FIG. 3, the support portion 31 and the plurality of tap coupling portions 32 are disposed at the top of the electrode assembly 10. The tap coupling portion 32 is coupled to the first non-coated portion 11 of the electrode assembly 10. The tap coupling portion 32 may be coupled to the first non-coated portion 11 in the radial direction of the electrode assembly 10 by, for example, welding. For example, the tap coupling portion 32 may be welded to the first non-coated portion 11 to be substantially parallel to the bottom face of the battery housing 20. Referring to FIG. 4, the welded portion TW formed between the first non-coated portion 11 and the tap coupling portion 32 may form a straight welding pattern approximately extending, for example, in the radial direction of the electrode assembly 10.

Meanwhile, the support portion 31, as well as the tap coupling portion 32, may also be coupled to the first non-coated portion 11. The tap coupling portion 32 and the first non-coated portion 11 may be coupled by welding. The support portion 31 and the tap coupling portion 32 are located lower than the beading portion 21 in the case where the beading portion 21 is formed in the battery housing 20.

The support portion 31 may include a hole H2 of the collector 30 formed at a position corresponding to a winding hole H1 formed at approximately the center of the electrode assembly 10. The winding hole H1 and the hole H2 of the collector 30, which communicate with each other, may serve as a passage for insertion of a welding rod or radiation of a laser beam for welding between a terminal 50 and a second collector 60, which will be described later, or for welding between the terminal 50 and a lead tab (not shown). The hole H2 of the collector 30 has a diameter substantially equal to or greater than that of the winding hole H1 of the electrode assembly 10 so as not to cover the winding hole H1 formed in the core of the electrode assembly 10. If the diameter of the hole H2 of the collector 30 is excessively smaller than the diameter of the winding hole H1, the winding hole H1 may be obscured, lowering the liquid injection performance and making it difficult to secure sufficient space for insertion of a welding device or radiation of a laser beam.

The plurality of tap coupling portions 32 may extend approximately radially from the support portion 31 of the collector 30 toward the side wall of the battery housing 20. The respective tap coupling portions 32 may be positioned to be spaced apart from each other along the circumference of the support portion 31.

The plurality of housing coupling portions 33 may extend approximately radially from the support portion 31 of the collector 30 toward the side wall of the battery housing 20. The respective housing coupling portions 33 may be positioned to be spaced apart from each other along the circumference of the support portion 31. At least one housing coupling portion 33 may be located between adjacent tap coupling portions 32.

The housing coupling portion 33 may extend from the support portion 31 to be electrically coupled to the inner surface of the battery housing 20. For example, the housing coupling portion 33 may be coupled to, for example, the beading portion 21 on the inner surface of the battery housing 20. In particular, the housing coupling portion 33 may be coupled to the upper surface of the beading portion 21.

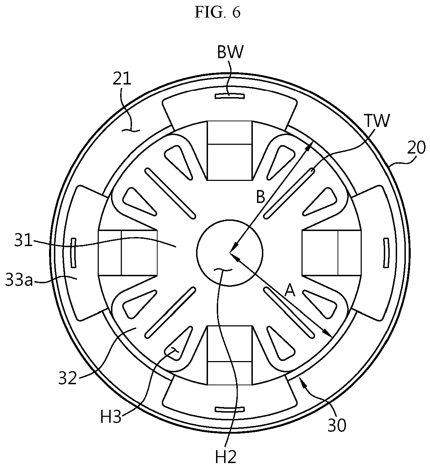

In the case of applying the above structure to the battery cell 1 of the present disclosure, the electrode assembly 10 with the collector 30 coupled thereto may be received inside the battery housing 20 so that the housing coupling portion 33 may be seated on the beading portion 21. Therefore, the welding process of the battery housing 20 and the collector 30 may be performed easily. For example, as can be seen in FIG. 6, at least one welded portion BW may be provided between the beading portion 21 and the housing coupling portion 33. That is, the collector 30 may include at least one welded portion BW to be welded to the inner surface of the battery housing 20. For example, laser welding, ultrasonic welding, or spot welding may be applied as welding between the battery housing 20 and the collector 30. In addition, the upper surface of the beading portion 21 may be configured to extend in a direction approximately parallel to the bottom face of the battery housing 20, that is, in a direction approximately perpendicular to the side wall of the battery housing 20, and the housing coupling portion 33 may also be configured to extend in the same direction, that is, in the radial direction and the circumferential direction, so that the housing coupling portion 33 may come into stable contact with the beading portion 21. In addition, since the housing coupling portion 33 is in stable contact with the beading portion 21 as described above, welding between two components can be effectively performed, thereby improving the bonding force between the two components and minimizing an increase in resistance at the coupling portion.

Referring to FIGS. 3 and 4, the housing coupling portion 33 includes a contact portion 33a coupled to the inner surface of the battery housing 20, and a connection portion 33b connecting the support portion 31 and the contact portion 33a. In one aspect of the present disclosure, the first tap coupling portion 32 may have a larger width than the connection portion 33b. In another aspect of the present disclosure, the contact portion 33a may have a larger width than the connection portion 33b.

The contact portion 33a is coupled to the inner surface of the battery housing 20. In the case where the beading portion 21 is formed in the battery housing 20, the contact portion 33a may be coupled onto the beading portion 21 as described above. In this case, for stable contact and coupling, both the beading portion 21 and the contact portion 33a may be configured to extend in a direction approximately parallel to the bottom face of the battery housing 20, that is, in a direction approximately perpendicular to the side wall of the battery housing 20.

Meanwhile, the contact portion 33a may be welded to the upper surface of the beading portion 21. That is, the welded portion BW may be formed on the upper surface area of the beading portion 21. The welded portion BW formed between the contact portion 33a and the beading portion 21 may be formed to be narrower than the upper surface of the beading portion 21.

At least a portion of the contact portion 33a may be formed in an arc shape extending in the circumferential direction along the beading portion 21 of the battery housing 20. Accordingly, the circumferential extension length of the contact portion 33a may be formed to be greater than the width of the connection portion 33b. In this case, in order to maximize the contact area, the collector 30 may be configured such that the sum of the circumferential extension lengths of the respective contact portions 33a of the plurality of housing coupling portions 33 is substantially equal to or slightly less than the inner circumference of the battery housing 20. In another aspect, the contact portion 33a may have arcs extending from the intersection of the connection portion 33b and the contact portion 33a in opposite directions on the beading portion 21 along the circumferential direction thereof.

Referring to FIG. 4, the collector 30 of the present disclosure may have at least one liquid injection hole H3. The liquid injection hole H3 may be provided, for example, in the tap coupling portion 32. In the case where a plurality of tap coupling portions 32 is provided, the liquid injection hole H3 may be provided in at least one tap coupling portion 32. For example, the liquid injection hole H3 may be provided on one side or on both sides of at least one welded portion TW formed on the tap coupling portion 32. Referring to FIGS. 3 and 4, in manufacturing the battery cell 1 according to an embodiment of the present disclosure, the assembly including the electrode assembly 10 and the collector 30 may be received inside the battery housing 20, and then an electrolyte may be injected. At this time, the liquid injection hole H3 may improve the liquid injection ability. A plurality of liquid injection holes H3 may be provided in one tap coupling portion 32. The plurality of liquid injection holes H3 may be disposed to be approximately symmetrical with respect to the center of the tap coupling portion 32 in the width direction. In this way, the welded portion TW for coupling the tap coupling portion 32 and the first non-coated portion 11 may be formed between the liquid injection holes H3 disposed to be approximately symmetrical in the left and right directions.

Referring to FIG. 4, the distance A from the center of the collector 30 to the end of the tap coupling portion 32 may be substantially equal to or less than the distance B from the center of the winding hole H1 of the electrode assembly 10 to the innermost portion of the beading portion 21 formed on the battery housing 20. In this case, it is possible to prevent the beading portion 21 from interfering with the collector 30 during the sizing process, thereby preventing the beading portion 21 from pressing the collector 30 and damaging the collector 30 and/or the electrode assembly 10. In addition, as will be described later, when venting gas is generated inside the battery cell 1, the collector 30 may be separated off upwards by the venting gas. At this time, in order for the collector 30 to be effectively separated off toward the top of the battery cell 1, the distance A from the center of the collector 30 to the end of the tap coupling portion 32 must be substantially equal to or less than the distance B from the center of the winding hole H1 of the electrode assembly 10 to the innermost portion of the beading portion 21 formed on the battery housing 20. That is, according to this structure, the upward movement distance of the collector 30 may be maximized.

Referring to FIG. 4, at least one or more welded portions TW may be provided in each tap coupling portion 32. The welded portion TW may be formed in the support portion 31 of the collector 30, as well as in the tap coupling portion 32.

The beading portion 21 may have a flat portion provided thereon as described above. At least one or more welded portions BW may be formed between the beading portion 21 and the contact portion 33a. At least one welded portion BW may form a straight welding pattern extending approximately in the circumferential direction on the beading portion 21. Alternatively, in another embodiment of the present disclosure, at least one welded portion BW formed between the beading portion 21 and the contact portion 33a may form a welding pattern in an arc shape extending approximately in the circumferential direction on the beading portion 21. The welded portion BW formed on the contact portion 33a may extend in the circumferential direction.

In one aspect of the present disclosure, the total number of welded portions BW formed on the contact portion 33a may be smaller than or equal to the number of tap coupling portions 32. Hereinafter, the number of welded portions BW formed on the contact portion 33a will be described in detail with reference to FIGS. 4 to 6.

FIG. 5 is a diagram illustrating an existing collector 30 as a comparative example of the present disclosure, and FIG. 6 is a diagram illustrating a collector 30 according to an embodiment of the present disclosure.

Referring to FIG. 5, the conventional collector 30 is configured such that the number of welded portions BW formed on the contact portion 33a is larger than the number of tap coupling portions 32. As a result, the bonding force between the battery housing 20 and the collector 30 may be improved. However, in this case, when gas venting occurs inside the battery cell 1, since the bonding force between the battery housing 20 and the collector 30 is strong, the collector 30 is not effectively separated. That is, since the housing coupling portion 33 of the collector 30 is strongly coupled onto the beading portion 21 of the battery housing 20, there is a limitation as to an increase in the upward movement distance of the collector 30.

On the other hand, referring to FIG. 6 showing the collector 30 according to an embodiment of the present disclosure, the number of welded portions BW formed on the contact portion 33a may be the same as the number of tap coupling portions 32. That is, according to the present disclosure, the number of welded portions BW is reduced compared to the conventional collector 30. For example, as shown in FIG. 6, there may be a total of four welded portions BW such that one welded portion BW is provided on each contact portion 33a. Meanwhile, there may be four tap coupling portions 32.

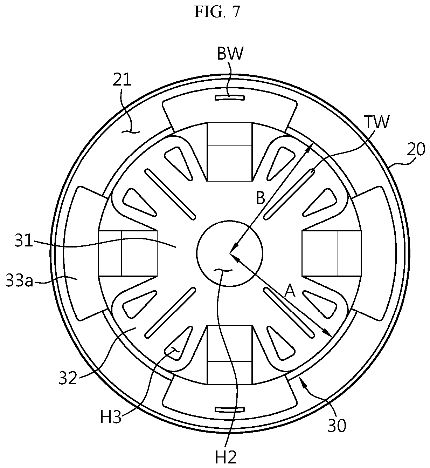

FIG. 7 is a diagram illustrating a collector 30 according to another embodiment of the present disclosure.

Referring to FIG. 7, the number of welded portions BW formed on the contact portion 33a may be configured to be smaller than the number of tap coupling portions 32. For example, FIG. 7 shows that a total of two welded portions BW are provided on the contact portion 33a. Meanwhile, four tap coupling portions 32 may be provided.

In this way, according to the structure in which the number of welded portions BW formed on the contact portion 33a is smaller than or equal to the number of tap coupling portions 32, the bonding force between the housing coupling portion 33 and the battery housing 20 may be lowered. Accordingly, in the case of gas venting from the battery cell 1, the collector 30 may be more easily deformed upwards. That is, in the case of gas venting from the battery cell 1, the upward movement distance of the collector 30 may further increase. For example, since the bonding force between the contact portion 33a and the beading portion 21 decreases, the contact portion 33a welded to the beading portion 21 may be separated therefrom by the venting gas ejected upwards. At the same time, the welding bond between the collector 30 and the first non-coated portion 11 welded to the collector 30 may be released. Accordingly, the collector 30 may be deformed to bend upwards, thereby moving upwards. Accordingly, the collector 30 may be effectively separated off from the first non-coated portion 11. As a result, the fusing feature may be strengthened inside the battery cell 1.

Meanwhile, FIGS. 6 and 7 represent only one embodiment of the present disclosure, and the number of welded portions BW and the number of tap coupling portions 32 are not limited to the numbers shown in FIGS. 6 or 7.

Meanwhile, the housing coupling portion 33 coupled to the beading portion 21 may maintain a certain degree of resistance even if the number of welded portions BW is relatively small. On the other hand, if the number of welded portions TW between the first non-coated portion 11 and the tap coupling portion 32 decreases, the internal resistance of the battery cell 1 significantly increases and the degree of resistance dispersion severely increases, so the process of reducing the number of welded portions TW between the first non-coated portion 11 and the tap coupling portion 32 is not desirable. Therefore, it is desirable to secure the fusing feature by reducing the number of welded portions BW between the inner surface of the battery housing 20 and the housing coupling portion 33.

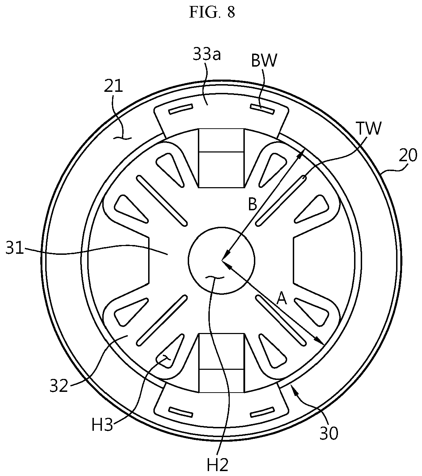

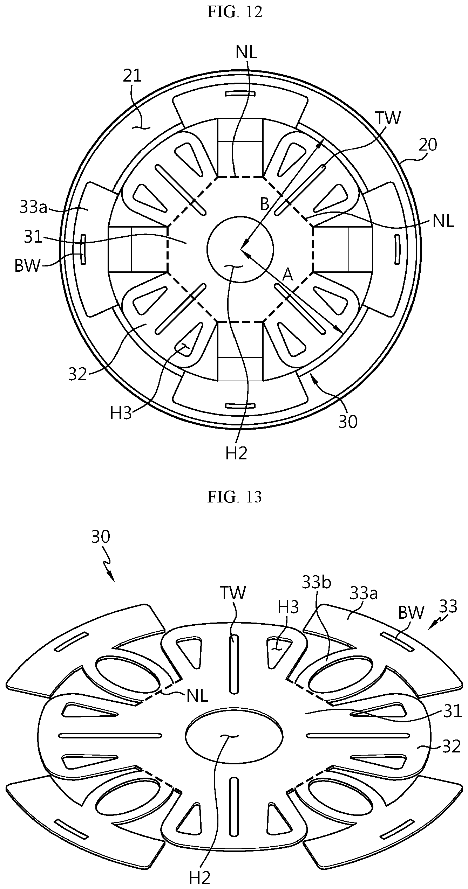

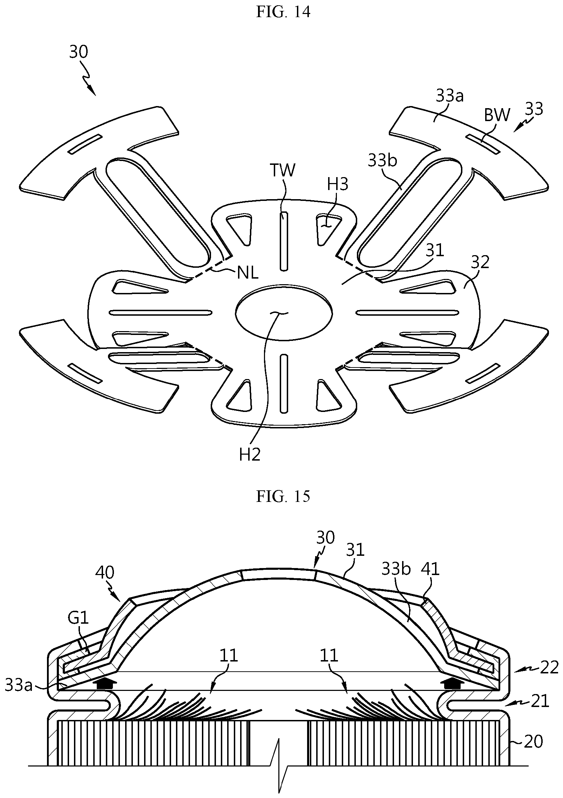

FIGS. 8 to 13 are diagrams illustrating a collector 30 according to another embodiment of the present disclosure, and FIG. 14 is a diagram illustrating the state in which the collector 30 in FIG. 13 is elongated.

Since the collector 30 according to FIGS. 8 to 14 is similar to the collector 30 in the previous embodiment, redundant descriptions of elements that are substantially the same as or similar to those in the previous embodiment will be omitted, and a description will be made below based on the differences from the previous embodiment.

In another aspect of the present disclosure, the number of housing coupling portions 33 may be configured to be smaller than the number of tap coupling portions 32.

For example, referring to FIG. 8, the number of housing coupling portions 33 may be configured to be smaller than the number of tap coupling portions 32. FIG. 8 shows that two housing coupling portions 33 are provide. Meanwhile, four tap coupling portions 32 may be provided.

According to the structure in which the number of housing coupling portions 33 is smaller than the number of tap coupling portions 32 as described above, the bonding force between the housing coupling portion 33 and the battery housing 20 may be reduced. Accordingly, in the case of gas venting from the battery cell 1, the collector 30 may be more easily deformed upwards. That is, in the case of gas venting from the battery cell 1, the upward movement distance of the collector 30 may further increase. As described above, as the collector 30 is turned over and deformed upwards, the welding bond between the collector 30 and the first non-coated portion 11 welded to the collector 30 may be easily released. Accordingly, the collector 30 may be effectively separated off from the first non-coated portion 11. As a result, the fusing feature may be strengthened inside the battery cell 1.

Meanwhile, FIG. 8 illustrates only one embodiment of the present disclosure, and the number of housing coupling portions 33 and the number of tap coupling portions 32 are not limited to the numbers shown in FIG. 8. However, it is desirable that the collector 30 has a symmetrical shape with respect to the straight line passing through the center of the collector 30. For example, in the case where two housing coupling portions 33 are provided as shown in FIG. 8, it is preferable that they are configured to be symmetrical relative to each other such that each housing coupling portion 33 is provided on both sides of the straight line passing through the center of the collector 30. Alternatively, in another embodiment, three housing coupling portions 33 and three tap coupling portions 32 may be configured. In this case as well, they are preferably configured to be symmetrical with respect to the straight line passing through the center of the collector 30. Therefore, in this embodiment, three housing coupling portions 33 may be formed at 120 degrees between the respective housing coupling portions 33, and three tap coupling portions 32 may be formed at 120 degrees between the respective tap coupling portions 32.

In another aspect of the present disclosure, the connection portion 33b and the contact portion 33a may be configured to have substantially the same width along the extension direction.

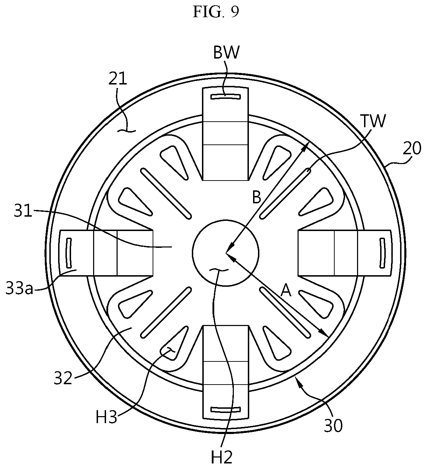

For example, referring to FIG. 9, the widths of the connection portion 33b and the contact portion 33a are substantially the same. According to this structure, the width becomes narrower than that of the connection portion 33b of the collector 30 shown in FIG. 6 or the like. That is, since the area of the contact portion 33a coupled to the beading portion 21 is reduced, the bonding force between the contact portion 33a and the beading portion 21 also decreases. Therefore, the bonding force between the housing coupling portion 33 and the battery housing 20 may be reduced. Accordingly, when gas venting occurs in the battery cell 1, the collector 30 may be more easily deformed upwards. That is, in the case of gas venting from the battery cell 1, the upward movement distance of the collector 30 may further increase. That is, the collector 30 may be effectively separated off from the electrode assembly 10. As a result, the fusing feature may be strengthened inside the battery cell 1.

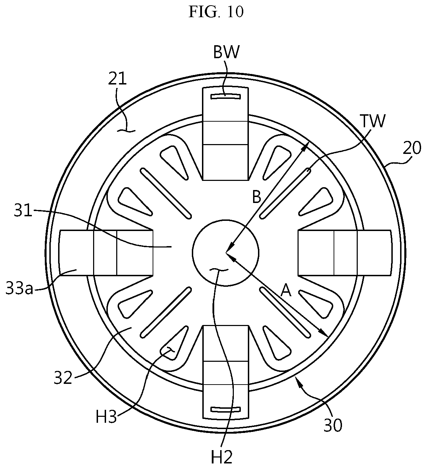

Referring to FIG. 10 as another embodiment of the present disclosure, the connection portion 33b and the contact portion 33a may be configured to have substantially the same width along the extension direction, and may also be configured such that the number of welded portions BW formed on the contact portion 33a is smaller than the number of tap coupling portions 32. According to this structure, the bonding force between the housing coupling portion 33 and the battery housing 20 may be further reduced compared to the collector 30 in FIG. 9. Accordingly, the fusing feature may be further strengthened.

In another aspect of the present disclosure, a breaking portion NL configured to have lower strength than the surrounding area may be provided at the boundary between the support portion 31 and the housing coupling portion 33. That is, the breaking portion NL may be configured to be more vulnerable in structure than the surrounding area. For example, the breaking portion NL may be configured to have a smaller thickness than that of the surrounding area. Alternatively, the breaking portion NL may be configured to have a lower density than the surrounding area.

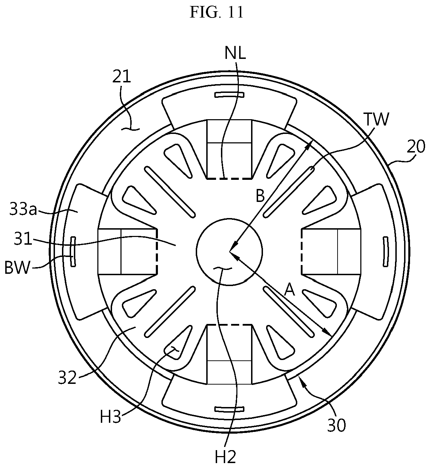

Referring to FIG. 11, a breaking portion NL may be provided at the boundary between the support portion 31 and the housing coupling portion 33. For example, the breaking portion NL may be configured in the form of a notch formation line including a plurality of notches. That is, the breaking portion NL may be configured in an approximately straight shape. More specifically, a breaking portion NL may be provided at the boundary between the support portion 31 and the connection portion 33b. Although not shown in the drawing, in another embodiment, the breaking portion NL may also be provided on the connection portion 33b. Alternatively, the breaking portion NL may also be provided at the boundary between the connection portion 33b and the contact portion 33a.

According to the structure in which the breaking portion NL is provided at the boundary between the support portion 31 and the housing coupling portion 33 as described above, when the collector 30 is deformed to bend upwards in the case of gas venting from the battery cell 1, strong pressure may be applied to the breaking portion NL, so that the breaking portion NL may break. Accordingly, the support portion 31 of the collector 30 may be separated from the housing coupling portion 33. At this time, the tap coupling portion 32 welded to the first non-coated portion 11 may also be separated from the housing coupling portion 33. That is, when gas venting occurs, the breaking portion NL may break so that the collector 30 may be separated into one part including the support portion 31 and the tap coupling portion 32 and the other part corresponding to the housing coupling portion 33. As a result, the fusing feature may be strengthened by the fracture of the breaking portion NL.

Meanwhile, in this case, an insulator S, which will be described later, may be interposed between the beading portion 21 and the electrode assembly 10. **In** this case, the insulator S may more thoroughly prevent maintenance of the electrical connection between the electrode assembly 10 and the battery housing 20 through the beading portion 21.

**In** another aspect of the present disclosure, a breaking portion NL configured to have lower strength than the surrounding area may be provided at the boundary between the support portion 31 and the tap coupling portion 32.

For example, referring to FIG. 12, a breaking portion NL may be provided at the boundary between the support portion 31 and the tap coupling portion 32, as well as at the boundary between the support portion 31 and the housing coupling portion 33.

According to this structure, when gas venting occurs and the collector 30 is deformed upwards, strong pressure may be applied to the breaking portion NL to cause fracture in the breaking portion NL, so that only the support portion 31 of the collector plate may be separated from the surrounding area of the support portion 31. Since the support portion 31 serves to indirectly connect the tap coupling portion 32 and the housing coupling portion 33, if the support portion 31 is separated from the collector 30, the electrical connection between the tap coupling portion 32 and housing coupling portion 33 may be interrupted. Moreover, in this embodiment, since the breaking portion NL is provided along the perimeter of the support portion 31, the support portion 31 is more likely to break away during gas venting. Accordingly, the fusing feature may be further strengthened.

In another aspect of the present disclosure, the housing coupling portion 33 may be configured to be elongated in length.

Referring to FIGS. 13 and 14, that is, the housing coupling portion 33 is configured such that the length of the housing coupling portion 33 when the housing coupling portion 33 is elongated is greater than the length thereof when the housing coupling portion 33 is not elongated. For example, at least a portion of the housing coupling portion 33 may be configured to have a rim shape with an empty center. In particular, the connection portion 33b of the housing coupling portion 33 may be configured to have a rim shape with an empty center.

Here, the rim shape includes a circular shape, but is not necessarily limited to the circular shape. For example, the rim shape meant in the present disclosure may be a polygonal structure such as a triangle or a square, or may indicate a specific shape with a curved edge. That is, the rim shape in the present disclosure includes all shapes with an empty center and a continuous edge.

For example, in an embodiment of the present disclosure, at least a portion of the housing coupling portion 33 may be configured to have an oval ring shape in a plan view as shown in FIG. 13. In particular, the connection portion 33b of the housing coupling portion 33 may have the planar shape of an oval ring. Here, the major axis of the ellipse may be lengthened and the minor axis thereof may be shortened by elongation of the connection portion 33b. Alternatively, although not shown in the drawings, as another embodiment of the present disclosure, the housing coupling portion 33 may have the planar shape of a rhombus.

According to this structure, when assembling the collector 30 to the battery cell 1, the connection portion 33b may be easily elongated. That is, the collector 30 made of a single plate may be elongated without wrinkles or damage without using a separate structure. Specifically, referring to FIG. 3, the support portion 31 of the collector 30 is spaced a predetermined distance from the contact portion 33a of the housing coupling portion 33 of the collector 30 in the direction toward the central axis of the battery cell 1. In order to do so, the collector 30 having a planar shape in FIG. 13 must be deformed to be elongated in the vertical direction. For example, the boundary between the support portion 31 and the connection portion 33b and the boundary between the contact portion 33a of the connection portion 33b may be bent, respectively. In this case, in order for the radial length from the center of the collector 30 to the end of the housing coupling portion 33 to remain constant, the length of the connection portion 33b must be increased. Accordingly, when bending the housing coupling portion 33 as shown in FIG. 14, the oval ring shape may be deformed so that the housing coupling portion 33 may be elongated in its extension direction.

Referring to FIGS. 1 to 3, the housing cover 40 may have a venting portion 41 formed to prevent an increase in internal pressure due to gas generated inside the battery housing 20. The venting portion 41 may be configured to break if the internal pressure of the battery housing 20 increases to a certain level or more. For example, the venting portion 41 may be formed in a portion of the housing cover 40, and may be a more vulnerable area in structure than the surrounding area so as to be easily broken when internal pressure is applied. For example, the venting portion 41 may be an area having a smaller thickness than the surrounding area. Referring to FIGS. 1 and 2, the venting portion 41 may form an approximately circular closed loop.

In one aspect of the present disclosure, the radial length of the venting portion 41 may be configured to be greater than the radial length of the support portion 31. Preferably, the radial length of the venting portion 41 may be configured to be greater than the distance A from the center of the collector 30 to the end of the tap coupling portion 32.

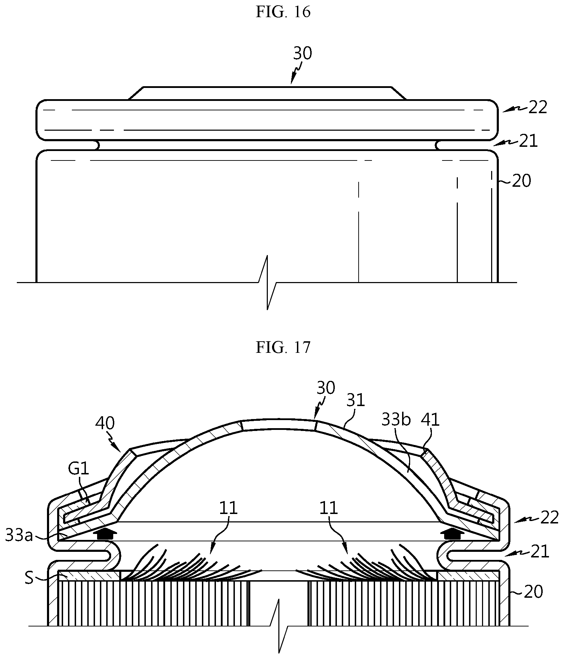

For example, referring to FIGS. 2 and 3, the distance from the center of the collector 30 to the outermost point of the support portion 31 may be configured to be smaller than the distance from the center of the housing cover 40 to the venting portion 41. According to this structure, when gas venting occurs in the battery cell 1, the inner area of the venting portion 41 may be separated off, so that the collector 30 may easily turn over to the outside of the battery cell 1. Preferably, if the radial length of the venting portion 41 is configured to be greater than the distance A from the center of the collector 30 to the end of the tap coupling portion 32, the collector 30 may more easily turn over to the outside of the battery cell 1. This will be described in detail below with reference to FIGS. 15 and 16.

FIG. 15 is a diagram illustrating the state after gas venting occurs in a battery cell 1 according to an embodiment of the present disclosure, and FIG. 16 is a diagram illustrating the battery cell 1 in FIG. 15 viewed from the outside.

For some reason, a thermal event may occur inside the battery cell 1, thereby generating venting gas, and the venting gas may increase the pressure inside the battery housing 20. At this time, since the venting portion 41 corresponds to the area that is more vulnerable in structure than the surrounding area and easily breaks when the internal pressure of the battery cell 1 increases, breakage may occur in the venting portion 41. Accordingly, as shown in FIGS. 15 and 16, a portion of the housing cover 40 corresponding to the inner area of the venting portion 41 may be torn upwards. That is, when viewed from the top of the battery cell 1, the inner area of the venting portion 41 may be open. At the same time, as shown in FIGS. 15 and 16, a portion of the housing cover 40 corresponding to the outer area of the venting portion 41 may be bent upwards by the high-pressure venting gas ejected upwards.

Meanwhile, the collector 30 may also be separated upwards by the high-pressure venting gas ejected upwards. That is, the welded portion TW between the collector 30 and the first non-coated portion 11 may fracture. As a result, the collector 30 may move upwards as shown in FIGS. 15 and 16. Since the support portion 31 among the various portions of the collector 30 has the maximum movement distance, in order for the support portion 31 to easily move out of the battery cell 1, the separated area of the housing cover 40 is preferable greater than or equal to the size of the support portion 31. That is, according to the structure of the present disclosure in which the radial length of the venting portion 41 is greater than or equal to the radial length of the support portion 31, the upward movement distance of the collector 30 may be maximized.

Meanwhile, according to the structure of the present disclosure in which the total number of welded portions BW formed on the contact portion 33a is less than or equal to the number of the tap coupling portion 32, the bonding force between the housing coupling portion 33 and the battery housing 20 may be reduced. For example, the collector 30 may be separated off from the inner surface of the battery housing 20. In particular, the contact portion 33a may be separated off from the upper surface of the beading portion 21 in the direction of the arrow shown in FIG. 15. Accordingly, when gas venting occurs in the battery cell 1, the collector 30 may be more easily deformed upwards. That is, when gas venting occurs in the battery cell 1, the upward movement distance of the collector 30 may further increase.

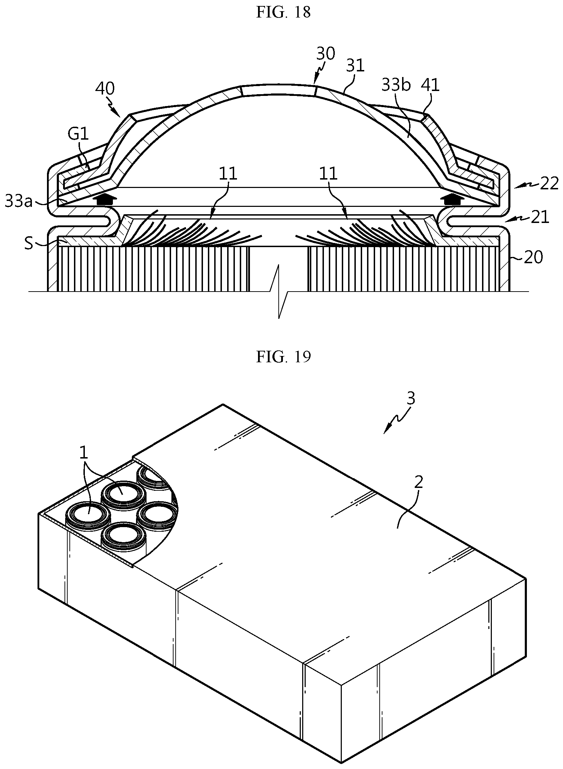

FIG. 17 is a diagram illustrating a battery cell 1 according to another embodiment of the present disclosure, and FIG. 18 is a diagram illustrating a battery cell 1 according to another embodiment of the present disclosure.

In another aspect of the present disclosure, referring to FIG. 17, the battery cell 1 may include an insulator S interposed between the beading portion 21 and the electrode assembly 10. The insulator S may include a material having insulating properties. The insulator S may have, for example, a tape or sheet shape.

According to the structure in which the insulator S with insulation properties is interposed between the beading portion 21 and the electrode assembly 10, it is possible to avoid the situation in which fusing operation is not completely performed due to a residual contact portion 33a even after the collector 30 is separated off. That is, the insulator S interposed between the beading portion 21 and the electrode assembly 10 as shown in FIG. 17 may block formation of a current path.

Preferably, the insulator S may have a shape that matches the inner surface of the beading portion 21.

For example, referring to FIG. 18, the insulator S may have a shape bent and extended upwards toward the beading portion 21. According to this structure, it is possible to completely block contact between the first non-coated portion 11 and the battery housing 20. That is, as the collector 30 moves upwards due to the pressure of venting gas as shown in FIG. 18, the first non-coated portion 11 welded to the collector 30 may also be deformed to bend upwards. Accordingly, the first non-coated portion 11 that is upwardly bent is likely to come into contact with the inner surface of the battery housing 20. In particular, since the beading portion 21 has a structure recessed into the battery housing 20, it may be more likely to come into contact with the first non-coated portion 11 that is upwardly bent. That is, a current path may be formed by contact between the first non-coated portion 11 and the battery housing 20. However, according to the structure of the present disclosure in which the insulator S has a shape that matches the inner surface of the beading portion 21, since the insulator S surrounds the inner surface of the beading portion 21, it is possible to prevent the first non-coated portion 11 from coming into contact with the beading portion 21. In other words, it is possible to reliably block formation of a current path.

Referring to FIGS. 1 to 3, the housing cover 40 covers the opening formed on one side of the battery housing 20. The housing cover 40 may be fixed by the crimping portion 22 formed on the top of the battery housing 20. In this case, a sealing gasket G1 may be interposed between the battery housing 20 and the housing cover 40 and between the collector 30 and the housing cover 40 to improve the fixing force and the airtightness of the battery housing 20. In this case, the contact portion 33a and/or a second contact portion may be interposed between the beading portion 21 of the battery housing 20 and the sealing gasket G1. The contact portion 33a and/or the second contact portion interposed between the beading portion 21 and the sealing gasket G1 as described above may be fixed by bending the crimping portion 22 extending upwards from the beading portion 21.

Referring to FIG. 3, the terminal 50 penetrates through the battery housing 20 on the opposite side of the opening of the battery housing 20 and is electrically connected to the second non-coated portion 12 of the electrode assembly 10. The terminal 50 may penetrate approximately the center of the bottom face of the battery housing 20. The terminal 50 may be coupled to, for example, a second collector 60 coupled to the second non-coated portion 12 or a lead tab (not shown) coupled to the second non-coated portion 12, thereby being electrically connected to the electrode assembly 10. Accordingly, the terminal 50 may have the same polarity as the second electrode of the electrode assembly 10 and may function as a second electrode terminal T2. If the second non-coated portion 12 is a positive electrode tab, the terminal 50 may function as a positive electrode terminal.

Considering the polarity and function of the terminal 50, the terminal 50 must remain insulated from the battery housing 20, which has the opposite polarity thereof. To this end, an insulating gasket G2 may be provided between the terminal 50 and the battery housing 20. Alternatively, a portion of the surface of the terminal 50 may be coated with an insulating material so as to be insulated.

For the same reason, the second non-coated portion 12 and/or the second collector 60 must remain insulated from the battery housing 20. To this end, an insulator 70 may be interposed between the second non-coated portion 12 and the battery housing 20 and/or between the second collector 60 and the battery housing 20. In the case where the insulator 70 is applied, the terminal 50 may penetrate through the insulator 70 for electrical connection with the second non-coated portion 12.

Meanwhile, in the present disclosure, the outer surface 20a of a closed portion located on the opposite side of the opening provided at the top of the battery housing 20 may function as a first electrode terminal T1. If the first non-coated portion 11 is a negative electrode tab, the first electrode terminal T1 may be a negative electrode terminal. As described above, the battery cell 1 according to the present disclosure has a structure capable of using the terminal 50 exposed through the bottom face located on the opposite side of the opening of the battery housing 20 as the second electrode terminal T2 and capable of using the remaining area, excluding the area occupied by the terminal 50 on the bottom face of the battery housing 20 (including the area where the insulating gasket G2 is exposed in the case where the insulating gasket G2 is exposed to the outside of the terminal 50 through the outer surface 20a of the closed portion), as the first electrode terminal T1. Therefore, the battery cell 1 according to the present disclosure may enable connection with both the positive electrode and the negative electrode in one direction when electrically connecting a plurality of battery cells 1, thereby simplifying the electrical connection structure. In addition, the battery cell 1 according to the present disclosure has a structure capable of using most of the bottom face located on the opposite side of the opening of the battery housing 20 as an electrode terminal, so there is an advantage of securing sufficient area for welding components for electrical connection.

Referring to FIGS. 2 and 3, the second collector 60 is coupled to the bottom of the electrode assembly 10. The second collector 60 is made of a conductive metal material and is electrically coupled to the second non-coated portion 12.

Referring to FIG. 19, a battery pack 3 according to an embodiment of the present disclosure includes a battery assembly in which a plurality of battery cells 1 according to an embodiment of the present disclosure is electrically connected as described above, and a pack housing 2 accommodating the same. For convenience of illustration, the components such as a bus bar for electrical connection, a cooling unit, and power terminals are omitted from the drawings of the present disclosure.

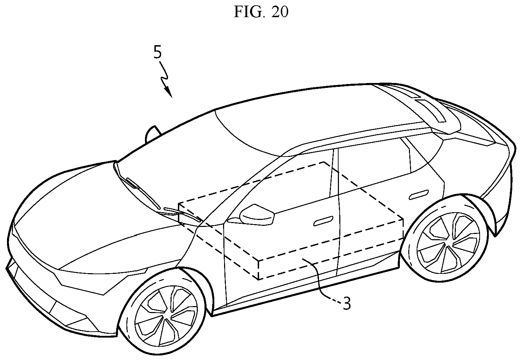

Referring to FIG. 20, a vehicle 5 according to an embodiment of the present disclosure may be, for example, an electric vehicle, a hybrid vehicle, or a plug-in hybrid vehicle, and include the battery pack 3 according to an embodiment of the present disclosure. The vehicle 5 includes a four-wheeled vehicle and a two-wheeled vehicle. The vehicle 5 operates by receiving power from the battery pack 3 according to an embodiment of the present disclosure.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

### [Description of Reference numerals]

5: Vehicle
3: Battery pack
2: Pack housing
1: Battery cell
10: Electrode assembly
11: First non-coated portion
12: Second non-coated portion
H1: Winding hole
20: Battery housing
20a: External surface of closed portion
T1: First electrode terminal
21: Beading portion
22: Crimping portion
30: Collector (first collector)
H2: Collector hole
31: Support portion
32: Tap coupling portion
H3: Liquid injection hole
33: Housing coupling portion
33a: Contact portion
33b: Connection portion
NL: Breaking portion
40: Housing cover
41: Venting portion
G1: Sealing gasket
S: Insulator
50: Terminal
T2: Second electrode terminal
G2: Insulating gasket
60: Second collector
N: Current breaker
70: Insulator

## Claims

1. A battery cell comprising:
an electrode assembly in which a first electrode and a second electrode are wound around a winding axis while a separator is interposed therebetween, thereby defining a core and an outer circumferential surface, the first electrode comprising a first non-coated portion that is not coated with an active material layer along the winding direction;
a battery housing having an opening provided on one side thereof and configured to accommodate the electrode assembly through the opening;
a collector comprising a support portion disposed on an upper portion of the electrode assembly, a tap coupling portion extending from the support portion and coupled to the first non-coated portion, and a housing coupling portion extending from the support portion to be electrically coupled to the inner surface of the battery housing and comprising at least one welded portion welded to the inner surface of the between housing; and
a housing cover configured to cover the opening,
wherein the number of welded portions is smaller than or equal to the number of tap coupling portions, or
wherein a breaking portion configured to have lower strength than the surrounding area is provided at the boundary between the support portion and the housing coupling portion.

2. The battery cell according to claim 1,
wherein the number of housing coupling portions is smaller than the number of tap coupling portions.

3. The battery cell according to claim 1,
wherein the housing coupling portion comprises:
a contact portion coupled to the inner surface of the battery housing; and
a connection portion connecting the support portion and the contact portion.

4. The battery cell according to claim 3,
wherein the connection portion and the contact portion have the same width in the extension direction.

5. The battery cell according to claim 1,
wherein the breaking portion is configured in the form of a notch formation line comprising a plurality of notches.

6. The battery cell according to claim 1,
wherein a breaking portion configured to have lower strength than the surrounding area is provided at the boundary between the support portion and the tap coupling portion.

7. The battery cell according to claim 1,
wherein the housing coupling portion is configured to be elongated in length.

8. The battery cell according to claim 1,
wherein at least a portion of the housing coupling portion has a rim shape with an empty center.

9. The battery cell according to claim 1,
wherein the housing cover comprises
a venting portion configured to break when the internal pressure of the battery housing increases to a certain level or more.

10. The battery cell according to claim 9,
wherein the radial length of the venting portion is greater than the radial length of the support portion.

11. The battery cell according to claim 1,
wherein the battery housing comprises
a beading portion formed at an end adjacent to the opening and press-fitted inward.

12. The battery cell according to claim 11,
wherein the battery cell comprises
an insulator interposed between the beading portion and the electrode assembly.

13. The battery cell according to claim 12,
wherein the insulator has
a shape that matches the inner surface of the beading portion.

14. A battery pack comprising at least one battery cell according to any one of claims 1 to 13.

15. A vehicle comprising at least one battery pack according to claim 14.
